# EUROPÄISCHE PATENTSCHRIFT

(11) **EP 3 720 723 B1**
(45) Veröffentlichungstag und Bekanntmachung des Hinweises auf die Patenterteilung: **07.12.2022**
(21) Anmeldenummer: 18778437.6
(22) Anmeldetag: 24.09.2018
(51) Int. Cl.: B60C 11/24, B60C 19/00

(54) **REIFEN, INSBESONDERE FAHRZEUGREIFEN, MIT EINER SENSORANORDNUNG, SOWIE VERFAHREN ZUM ERMITTELN EINER PROFILTIEFE DES REIFENS**
TIRE, ESPECIALLY VEHICLE TIRE COMPRISING A PROFILE DEPTH SENSOR
PNEUMATIQUE, PARTICULIÈREMENT POUR VÉHICULE, COMPORTANT UN CAPTEUR DE PROFONDEUR DE PROFIL

(30) Priorität: 07.12.2017 DE 102017222118
(43) Veröffentlichungstag der Anmeldung: 14.10.2020
(73) Patentinhaber: Continental Reifen Deutschland GmbH, 30165 Hannover (DE)
(72) Erfinder: SCHÜRMANN, Oliver, 30149 Hannover (DE); ROSTEK, Marian, 30149 Hannover (DE); BUSCHE, Joachim, 30149 Hannover (DE)
(74) Vertreter: Continental Corporation
(86) Internationale Anmeldenummer: PCT/EP2018/075719
(87) Internationale Veröffentlichungsnummer: WO 2019/110158

(56) Entgegenhaltungen:
- WO-A1-03/031208
- DE-U1- 20 216 290
- FR-A1- 2 835 218

## Beschreibung

Die Erfindung betrifft einen Reifen, insbesondere Fahrzeugreifen, mit einer Sensoranordnung, sowie ein Verfahren zum Ermitteln einer Profiltiefe des Reifens.

Zum Erfassen von Reifeneigenschaften oder Reifenzuständen eines Reifens, beispielsweise einer Profiltiefe des Reifens, ist beispielsweise eine am Fahrzeug angeordnete Sensoranordnung bekannt, wobei die Sensoranordnung vom Reifen reflektierte Strahlung detektieren kann, aus der unter Kenntnis der Eigenschaften von vorab auf den Reifen ausgesandter Strahlung die Profiltiefe des Reifens hergeleitet werden kann. Durch eine derartige Messmethode kann eine Änderung des Abriebzustandes bzw. der Profiltiefe erfasst werden.

Nachteilig hierbei ist, dass ein derartiger Sensoraufbau sehr fehleranfällig ist, da äußere Einflüsse zwischen der Sensoranordnung und dem Reifen die Messung verfälschen oder unbrauchbar machen können. Zudem ist die Justierung eines derartigen Sensoraufbaus sehr aufwändig und eine Messung nur im Stillstand möglich.

Weiterhin sind Methoden bekannt, bei denen durch eine lokale und manuelle durchgeführte Messung einer Rillentiefe von Rillen im Reifenprofil eines Laufstreifens aus einer Höhendifferenz eine verbliebene Materialstärke des Reifenprofils hergeleitet wird. Der Nachteil hierbei ist, dass derartige Messverfahren sehr umständlich sind und zudem auch nur im Stillstand des Fahrzeuges durchgeführt werden können. Eine vollumfängliche Erfassung der Profiltiefe ist zudem sehr aufwändig. Auch eine weitere Verarbeitung der Messwerte ist aufgrund der manuellen Durchführung der Messung nur sehr umständlich möglich und die Messwerte können zudem nicht mit einem beliebigen Fahrzustand des Reifens verknüpft werden.

Ein weiteres Messverfahren sieht eine Messung des Abrollumfangs des Reifens vor, der sich mit der Profiltiefe entsprechend verändert. Nachteilig hierbei ist, dass aus einer Veränderung des Abrollumfangs keine lokale Aussage über die Profiltiefe getroffen werden kann und weitere Einflüsse die Messung verfälschen können.

Die FR 2 835 218 A1, WO 03/031208 A1 und DE 202 16 290 U1 offenbaren bekannte Fahrzeugreifen mit Sensoren.

Es ist daher Aufgabe der Erfindung, einen Reifen mit einer Sensoranordnung bereitzustellen, in dem in einfacher und zuverlässiger Weise eine Ermittlung einer Profiltiefe des Reifens auch im Fahrbetrieb des Fahrzeuges erfolgen kann. Zudem ist Aufgabe der Erfindung, ein Verfahren zum Ermitteln der Profiltiefe eines derartigen Reifens anzugeben.

Diese Aufgabe wird durch einen Reifen nach Anspruch 1 gelöst. Bevorzugte Weiterbildungen sind in den Unteransprüchen angegeben.

Erfindungsgemäß ist demnach vorgesehen, in einem Reifen, insbesondere einem Fahrzeugreifen, mit einem Laufstreifen mindestens eine Sensoranordnung mit mindestens einem Sensorbereich anzuordnen, wobei der mindestens eine Sensorbereich mindestens ein Sensorelement mit zwei Kontaktstellen sowie einer zwischen den Kontaktstellen angeordneten dielektrischen Schicht aufweist, wobei der dielektrischen Schicht eine Dielektrizitätskonstante, eine Dicke, eine Länge und eine Höhe zugeordnet ist. Das mindestens eine Sensorelement ist hierbei zumindest bereichsweise derartig in den Laufstreifen des Reifens integriert, dass die dielektrische Schicht des Sensorelementes in Abhängigkeit einer Profiltiefe des Reifens in ihrer Höhe infolge einer Abnutzung des Reifens veränderbar ist.

Somit wird ein Sensorelement ausgebildet, dass sich mit dem Reifen zusammen abnutzt, da es in den Reifen bzw. den Laufstreifen selbst integriert ist, wobei darunter zu verstehen ist, dass es mit diesem fest verbunden bzw. Teil des Laufstreifens selbst ist und dazu vorzugsweise bei der Herstellung des Laufstreifens bereits in diesen integriert wird. Somit ist dadurch nicht erfasst, dass das Sensorelement nach der Herstellung des Reifens in den Laufstreifen beispielsweise nach einem Stanzvorgang eingesteckt wird. Um eine Veränderung der Höhe der dielektrischen Schicht infolge einer Abnutzung des Reifens zu gewährleisten, wird die Höhe in der Richtung senkrecht zu einer Oberfläche des Laufstreifens definiert, so dass die Höhe parallel zu der Richtung, in der auch die Profiltiefe angegeben wird, ausgerichtet ist. Dazu ragt das Sensorelement vorzugsweise im Wesentlichen senkrecht von einer Oberfläche des Laufstreifens ausgehend in den Laufstreifen hinein.

Weiterhin ist erfindungsgemäß in der Sensoranordnung eine Messeinrichtung vorgesehen, wobei das Sensorelement über die beiden Kontaktstellen derartig über eine signalübertragende Verbindung mit der Messeinrichtung verbunden ist, dass die Veränderung der Höhe der dielektrischen Schicht durch das Erfassen einer Sensor-Messgröße von der Messeinrichtung detektierbar ist. Somit kann direkt im Reifen mit einem entsprechenden elektrischen Aufbau auch im Betrieb des Reifens eine auf die Profitiefe hinweisende Sensor-Messgröße erfasst werden. Die signalübertragende Verbindung kann hierbei beispielsweise eine ein- oder mehradrige Verbindung sein, die durch die Schichten des Laufstreifens entsprechend geführt werden, um die Messung der Sensor-Messgröße zu ermöglichen.

Gemäß einer bevorzugten Weiterbildung ist vorgesehen, dass die Kontaktstellen jeweils durch eine elektrisch leitfähige Gummischicht ausgebildet sind, wobei in der elektrisch leitfähigen Gummischicht zum Beispiel Rußpartikel und/oder kohlenstoffbasierende Partikel eingebracht sind zum Ausbilden der elektrischen Leitfähigkeit. Dadurch können die Kontaktstellen in einfacher und zuverlässiger Weise in den Laufstreifen integriert werden, ohne dass dabei die Reifeneigenschaften maßgeblich beeinträchtigt werden. Aufgrund der ähnlichen Materialien des Laufstreifens, der ebenfalls aus einem Gummimaterial hergestellt ist, und der Kontaktstellen kann ein vorteilhafter Übergang zwischen den Materialien erreicht werden. Selbiges gilt für eine weitere bevorzugte Weiterbildung, die vorsieht, dass die dielektrische Schicht durch eine Gummischicht mit dielektrischen Eigenschaften ausgebildet ist, so dass im Laufstreifen ein oder mehrere das Sensorelement ausbildende Gummischichten aneinander liegen.

Gemäß einer alternativen Ausführungsform ist vorgesehen, dass die dielektrische Schicht des Sensorelementes durch eine Gummischicht gebildet ist und die Kontaktstellen durch einen Beschichtungsprozess, z.B. in einem Druckprozess mit leitfähiger Tinte oder einem Bedampfungsprozess, auf dieser Gummischicht ausgebildet sind. Dadurch kann das Sensorelement sehr einfach hergestellt werden, da nach dem Bereitstellen der Gummischicht als dielektrische Schicht diese lediglich zu beschichten und ggf. nachzubehandeln ist. Als Sensorelement ist dann lediglich eine - dann beschichtete - Gummischicht zusätzlich in den Laufstreifen einzubringen, so dass die Reifeneigenschaften nicht wesentlich beeinträchtigt werden.

Gemäß einer weiteren alternativen Ausführungsform ist vorgesehen, dass die Kontaktstellen jeweils durch leitfähige Dünnschichten, beispielsweise Metallbleche, ausgebildet sind, die im Laufstreifen in geeigneter Weise an der dielektrischen Schicht, beispielsweise einer Gummischicht, anliegen, wobei die leitfähigen Dünnschichten in ihrer Beschaffenheit derartig dünn gefertigt sind, dass diese die Reifeneigenschaften nicht maßgeblich beeinträchtigen aber dennoch eine Kontaktstelle zur Energie- und Signalübertragung auf die dielektrische Schicht bereitgestellt werden kann.

Die dielektrische Schicht kann dabei ergänzend oder alternativ zu der Ausführung als eine Gummischicht mindestens ein Material aufweisen, das ausgewählt ist aus der Gruppe bestehend aus: Kunststoff oder Kunststoffmischungen, insbesondere mit Aluminiumbeschichtung, Polyethylen, PTFE, Titandioxid, ferroelektrische Materialien, Bariumtitanat, Keramiken, Steatit, Aluminiumoxid aus fein gemahlenen Granulaten, Aluminium-Silikate, Magnesium-Silikate, Aluminiumoxide mit einer relativen Permittivität zwischen 6 und 14'000, Aluminium-Elektrolyte, Tantal-Elektrolyte und deren amorphe Oxide, Glimmer, Übergangsmetalle, Mischoxide, Hafniumsilikat, Zirkoniumsilikat, Strontiumtitanat, Bariumtitanat und/oder kristalline Oxide Seltener Erden.

Um eine gute mechanische Verbindung mit den umgebenden Materialien zu gewährleisten, kann die dielektrische Schicht eine Gummibeschichtung aufweisen.

Gemäß einer bevorzugten Weiterbildung ist vorgesehen, dass die Sensor-Messgröße durch eine Kapazität oder eine davon abhängige Größe gegeben ist. D.h. die Höhenveränderung infolge einer Abnutzung des Reifens wird durch eine Veränderung der Kapazität detektiert, wobei daraus auf die Profiltiefe geschlossen werden kann. Demnach kann gemäß einer Ausbildung vorgesehen sein, die Profiltiefe aus der Sensor-Messgröße in Abhängigkeit der Dielektrizitätskonstante der dielektrischen Schicht, der Dicke der dielektrischen Schicht sowie der Länge der dielektrischen Schicht zu ermitteln. Diese stehen in einer fest definierten mathematischen Beziehung zueinander, wobei lediglich die Höhe der dielektrischen Schicht im Betrieb des Reifens variiert, so dass aus der gemessenen Kapazität eindeutig die sich ändernde Höhe und daraus bei bekannter Einbauposition des Sensorelementes im Laufstreifen bzw. der Situation bei Inbetriebnahme des Reifens die Profiltiefe ermittelt werden kann. Gemäß einer weiteren Ausbildung kann vorgesehen sein, die Profiltiefe aus der Sensor-Messgröße über eine Kennlinie und/oder ein Kennlinienfeld zu ermitteln, wobei die Kennlinie bzw. das Kennlinienfeld der Sensor-Messgröße bzw. der Kapazität eine vorab in Versuchen ermittelte Profiltiefe zuordnet.

Somit kann in einfacher Weise und ohne großen Rechenaufwand aus der Sensor-Messgröße bzw. der Kapazität die Profiltiefe ermittelt werden. Es können auch beide Bestimmungsmethoden miteinander für eine Plausibilisierung kombiniert werden. Demnach kann die über die Kennlinie bzw. das Kennlinienfeld ermittelte Profiltiefe mit der über die mathematische Beziehung aus der Höhe ermittelte Profiltiefe plausibilisiert werden. Weiterhin können auch mit unterschiedlichen Messverfahren ermittelte Profiltiefen plausibilisiert werden, beispielsweise aus dem Abrollumfang des Reifens ermittelte Profiltiefen oder mit anderen Sensoranordnungen ermittelte Profiltiefen.

Somit wird durch das mindestens eine Sensorelement ein Kondensator ausgebildet, dessen Kapazität als Sensor-Messgröße gemessen werden kann. Die dielektrische Schicht und die Kontaktstellen können hierbei nach Art eines Plattenkondensators, eines Zylinderkondensators oder eines Wickelkondensators ausgebildet sein. Die dielektrische Schicht und die Kontaktstellen können demnach flächig oder stückweise flächig bzw. eben, zylinderförmig oder spiralförmig ausgeführt sein, wobei zur Definition der Kapazität die Länge entsprechend der Form zu wählen ist.

Gemäß einer weiteren bevorzugten Ausführungsform können in einem Sensorbereich auch mehrere Sensorelemente vorgesehen sein, die in einer Parallel- und/oder Reihenschaltung angeordnet sind. Dabei kann auch ein gestapelter Kondensator vorgesehen sein, bei dem sich die Kontaktstellen und die dielektrischen Schichten vorzugsweise abwechseln, so dass Kontaktstellen von benachbarten Kondensatoren doppelt genutzt werden und jede Kontaktstelle zwecks Ermittlung der Sensor-Messgröße einzeln abgegriffen werden kann.

Gemäß einer weiteren bevorzugten Ausführungsform kann vorgesehen sein, dass sich die Dicke und/oder die Dielektrizitätskonstante der dielektrischen Schicht eines Sensorelementes in Abhängigkeit der Höhe über der Oberfläche des Laufstreifens verändert. So kann die dielektrische Schicht nahe der Oberfläche des noch unbenutzten Laufstreifens, d.h. bei geringer Höhe, dünner sein als weiter innen im Laufstreifen, d.h. bei ansteigender Höhe. Alternativ kann bei gleichbleibender Dicke die Dielektrizitätskonstante mit der Höhe variieren. Dadurch kann vorteilhafterweise eine nicht-lineare Abhängigkeit zwischen der Sensor-Messgröße und der Profiltiefe ausgebildet werden, wobei bei stärkerer Abnutzung des Reifens, d.h. bei geringen Profiltiefen, eine höhere Auflösung erreicht wird, da sich die Sensor-Messgröße bzw. die Kapazität pro Profiltiefenänderung aufgrund der dickeren dielektrischen Schicht bzw. der sich ändernden Dielektrizitätskonstante für hohe Profiltiefen T (stärkere Abnutzung) feinfühliger verändert. Weiterhin kann sich die Dicke und/oder die Dielektrizitätskonstante auch über die Länge der dielektrischen Schicht, d.h. über den Umfang des Laufstreifens verändern, um eine positionsgetreue Veränderung der Auflösung im Laufstreifen zu erreichen.

Gemäß einer bevorzugten Ausführungsform ist vorgesehen, mindestens einen Sensorbereich derartig an ein oder mehreren expliziten Messstellen in den Laufstreifen einzubringen, dass eine Anzeige oder ein Hinweis bezüglich einer gesetzlich vorgeschriebenen oder anderweitig empfohlenen Mindestprofiltiefe des Laufstreifens in einfacher Weise ausgegeben werden kann. So können die Sensorelemente an diesen expliziten Messstellen beispielsweise derartig im Laufstreifen angeordnet sein, dass sich eine Änderung der Kapazität bzw. der Sensor-Messgröße für diesen Sensorbereich erst dann ergibt, wenn eine gesetzliche Mindestprofiltiefe von z.B. 1,6mm und/oder eine empfohlene Mindestprofiltiefe für Winterreifen von 4mm erreicht wird. Wird somit eine Veränderung der Kapazität bzw. der Sensor-Messgröße an diesen expliziten Messstellen erfasst, kann dies dem Fahrer und/oder der Werkstatt mitgeteilt werden, so dass entsprechend mit einem Reifenwechsel reagiert werden kann.

Alternativ können die Sensorelemente an den expliziten Messstellen auch derartig angeordnet sein, dass sich eine Veränderung der Kapazität bzw. der Sensor-Messgröße lediglich bis zum Erreichen der jeweiligen Mindestprofiltiefe ergibt. Wird also während der Fahrt erkannt, dass sich die Kapazität bzw. die Sensor-Messgröße an den expliziten Messstellen für einen bestimmten Zeitraum nicht mehr weiter verändern, obwohl eine Abnutzung des Reifens und somit eine Änderung der Sensor-Messgröße bzw. der Kapazität zu erwarten ist, kann auf das Erreichen der Mindestprofiltiefe geschlossen werden und ein entsprechender Hinweis für einen Reifenwechsel ausgegeben werden.

Die expliziten Messstellen können sich hierbei an sogenannten TWIs (Tread Wear Indicators) orientieren, die in handelsüblichen Reifen gesetzlich vorgeschrieben sind und die das Erreichen der gesetzlichen Mindestprofiltiefe durch Erreichen der TWI-Höhe kenntlich machen. Die expliziten Messstellen können somit ergänzend und in vergleichbarer Anordnung zu diesen TWIs am Laufstreifen angeordnet sein, um vorteilhafterweise auch eine positionsgetreue, elektronische Erfassung der Mindestprofiltiefe zu ermöglichen.

Gemäß einer bevorzugten Weiterbildung ist vorgesehen, dass die Dielektrizitätskonstante der dielektrischen Schicht und/oder die Dicke der dielektrischen Schicht und/oder die Länge der dielektrischen Schicht zwischen Sensorelementen aus unterschiedlichen Sensorbereichen variiert. Dadurch kann eine Auflösung für unterschiedliche Sensorbereiche individuell eingestellt werden, da die Veränderung der o.g. Parameter zu einer Veränderung des Zusammenhangs zwischen gemessener Sensor-Messgröße und Profiltiefe führt.

Dadurch kann vorteilhafterweise eine an die Position der Sensorelemente im Reifen angepasste Ausführung erreicht werden, so dass eingestellt werden kann, wie feinfühlig eine Messung der Profiltiefe in einer bestimmten Position des Reifens erfolgen soll. Beispielsweise wirken nahe der Oberfläche mittig des Laufstreifens andere Kräfte als im Bereich der Reifenschultern, so dass der Laufstreifen in Abhängigkeit von der Fahrwerksgeometrie bzw. der Fahrwerkseinstellung, z.B. einer Spur und/oder einem Sturz, und vom Fahrer durchgeführten Fahrmanövern unterschiedlich stark abgenutzt werden kann und somit auch eine unterschiedlich starke Abnutzung und Belastung der diesen Bereichen zugeordneten Sensorelemente vorliegt. Dies kann bei der Auslegung der Sensorelemente vorteilhafterweise berücksichtigt werden.

Außerdem kann der Fahrer bei Kenntnis des zu erwartenden lokalen Abriebverhaltens des Reifens und bei daran angepasster Anordnung bzw. Auslegung der Sensorelemente frühzeitig über eine fehlerhafte Fahrwerkseinstellung und/oder Fahrwerksverschleiß (z.B. defekte Stoßdämpfer) informiert werden, z.B. wenn die gemessenen und ermittelten Daten nicht das erwartete Abriebverhalten repräsentieren.

Gemäß einer bevorzugten Weiterbildung ist vorgesehen, dass das Sensorelement mindestens eines Sensorbereiches über den gesamten Umfang des Laufstreifens ausgedehnt ist oder aber lediglich in einem lokalen Bereich des Laufstreifens ausgebildet ist. Demnach kann in unterschiedlichen Ausführungsformen eine über den gesamten Umfang des Laufstreifens gemittelte Profiltiefe oder die Profiltiefe lediglich in einem lokalen Bereich des Laufstreifens ermittelt werden und/oder in Abhängigkeit der gemessenen und ermittelten Daten eine Meldung ausgegeben werden, wann eine gesuchte Profiltiefe an irgendeiner Stelle des Laufstreifens erstmals erreicht wird. Hierbei kann vorteilhafterweise auch vorgesehen sein, in einem Sensorbereich ein Sensorelement über den gesamten Umfang des Laufstreifens auszudehnen und in weiteren Sensorbereichen lokale Sensorelemente anzuordnen und die Messungen aus unterschiedlichen Sensorbereichen miteinander zu plausibilisieren.

Eine Fläche eines Sensorbereiches kann zwischen 0,01 mm² bis 800'000 mm², bevorzugt zwischen 1 mm² bis 60'000 mm², besonders bevorzugt zwischen 100 mm² bis 1'200 mm² betragen. Dabei ist 0,01 mm² repräsentativ für eine Drahtstärke bzw. eine Dicke der Sensorelemente eines Sensorbereiches, 800'000 mm² repräsentativ für die gesamte Reifenoberfläche, 60'000 mm² repräsentativ für eine Bodenaufstandsfläche des Reifens und 100 mm² bis 1'200 mm² repräsentativ für die Größe eines Profilklotzes des Laufstreifens.

Gemäß einer weiteren Ausführung ist vorgesehen, dass im Reifen weiterhin eine Auswerteeinrichtung zum Ermitteln der Profiltiefe des Reifens in Abhängigkeit der ermittelten Sensor-Messgröße vorgesehen ist, wobei die Auswerteeinrichtung dazu ausgebildet ist,
- aus der Sensor-Messgröße die Höhe der dielektrischen Schicht und daraus die Profiltiefe, oder
- aus der Sensor-Messgröße über eine Kennlinie oder ein Kennlinienfeld die Profiltiefe zu ermitteln.

Somit können die Auswertung der Sensor-Messgröße und die Ermittlung der Profiltiefe auch bereits im Reifen erfolgen. Alternativ kann die Auswerteeinrichtung auch außerhalb des Reifens angeordnet sein, wobei dazu die Sensor-Messgröße zur Auswerteeinrichtung zu übertragen ist. Dazu kann gemäß einer bevorzugten Weiterbildung vorgesehen sein, im Reifen ein Kommunikationsmodul zum drahtlosen Übertragen der Profiltiefe und/oder der Sensor-Messgröße und/oder einer damit zusammenhängenden Größe an eine übergeordnete Steuereinrichtung vorzusehen. Demnach kann die Ermittlung der Profiltiefe bzw. auch die Weiterverarbeitung der im Reifen bereits ermittelten Profiltiefe beispielsweise im Rahmen einer Assistenzfunktion oder Stabilitätsfunktion, z.B. ESC oder ABS, in der Steuereinrichtung, insbesondere mit integrierter Auswerteeinrichtung, z.B. im Fahrzeug und/oder auf einem portablen Anzeigegerät, z.B. Smartphone oder PDA, erfolgen.

Gemäß einer weiteren bevorzugten Ausführungsform ist vorgesehen, dass im Reifen eine Energiequelle zum Bereitstellen von Energie an die Messeinrichtung und/oder auch an die Auswerteeinrichtung und/oder die Kommunikationseinrichtung angeordnet ist. Somit kann für die Ermittlung der Sensor-Messgröße sowie der darauffolgenden Auswertung auch Energie im Reifen auch während des Betriebs bereitgestellt werden.

Erfindungsgemäß ist vorgesehen, dass die Sensorelemente bei der Herstellung des Laufstreifens in diesen integriert werden, so dass nach der Fertigstellung des Reifens mit diesem Laufstreifen die Sensorelemente bzw. die jeweiligen Sensoranordnungen in den Reifen bereits eingefügt sind.

Dazu kann beispielsweise vorgesehen sein, dass die Sensorelemente oder die jeweilige Sensoranordnung als Ganzes in einem Extrusions-Vorgang des Laufstreifens bereits in diesen bzw. zwischen die Schichten des Laufstreifens eingefügt werden. Dazu können in dem Extrusions-Verfahren beispielsweise Laufstreifen-Extrudate, Kontaktstellen-Extrudate und ein Dielektrikum-Extrudat bereitgestellt werden, die im Extrusions-Vorgang zusammengefügt werden. Alternativ können die Sensorelemente bzw. die jeweilige Sensoranordnung als Ganzes nach dem Extrusions-Vorgang des Laufstreifens mit diesem zusammengefügt und durch chemische Zusätze oder Heizen zwecks Zusammenhalt während des Transports und der Lagerung vorvernetzt werden. In beiden Varianten findet anschließend ein Auflegen der vorab zusammengefügten Elemente auf die Reifenaufbautrommel, ein anschließendes Aufwickeln und ein Vulkanisierungsprozess statt, um den Reifen fertigzustellen.

Dadurch kann in einem herkömmlichen Extrudier-Vorgang mit zusätzlichen Extrudaten in einfacher Weise ein Laufstreifen mit einem Sensorelement für den erfindungsgemäßen Reifen hergestellt werden, der in einem folgenden Aufrollvorgang auf einer Reifenaufbautrommel mit den restlichen Reifenkomponenten zusammengefügt werden kann, um den Reifen fertigzustellen.

Gemäß einer Alternative können der Laufstreifen mit den jeweiligen Sensorelementen bzw. der Sensoranordnung als Ganzes auch erst auf der Reifenaufbautrommel schichtweise zusammengefügt werden. Die einzelnen Elemente, d.h. Schichten des Laufstreifens und Schichten mit den Sensorelementen bzw. der Sensoranordnung, werden dann einzeln bereitgestellt und einzeln auf die Reifenaufbautrommel überführt, so dass der endgültige Laufstreifen aus den unterschiedlichen Schichten erst auf der Reifenaufbautrommel durch das Aufwickeln zusammengestellt wird. In einem anschließenden Vulkanisierungsprozess wird dann der Reifen mit diesem Laufstreifen und darin integrierten Sensorelementen fertiggestellt.

Zum Ermitteln der Profiltiefe mit einem beschriebenen Reifen kann demnach erfindungsgemäß vorgesehen sein, zunächst eine Sensor-Messgröße nach Inbetriebnahme des Reifens zu ermitteln oder die für die entsprechende Sensoranordnung bzw. die Sensorelemente aus der Konstruktion und Herstellung des Reifens bekannte Sensor-Messgröße heranzuziehen, wobei die Sensor-Messgröße eine Kapazität der Sensorelemente der Sensoranordnung charakterisiert. Anschließend wird in Zeitintervallen erfasst, ob eine zeitliche Veränderung der Sensor-Messgröße vorliegt, wobei bei einer solchen Veränderung die Profiltiefe in Abhängigkeit der erfassten Sensor-Messgröße folgt. Dabei kann vorzugsweise vorgesehen sein, dass aus der Sensor-Messgröße die Höhe der dielektrischen Schicht und daraus die Profiltiefe, oder aus der Sensor-Messgröße über eine Kennlinie oder ein Kennlinienfeld die Profiltiefe ermittelt wird, wie bereits beschrieben. Die Zeitintervalle zwischen verschiedenen Messungen der Sensor-Messgröße können je nach Anwendung z.B. im Bereich von Millisekunden oder noch darunterliegen und/oder bis zu mehreren Tagen dauern. Außerdem sind auch dynamische Messungen mit nicht-konstanten Zeitintervallen möglich. Es kann vorteilhafterweise auch eine Plausibilisierung aus beiden ermittelten Profiltiefen vorgesehen sein, um Fehler oder Sondersituationen zu erkennen.

Anhand von Ausführungsbeispielen wird die Erfindung im Folgenden näher erläutert. Es zeigen:
- Fig. 1: eine Schnittansicht eines Reifens mit einer Sensoranordnung;
- Fig. 2, 3, 4: Detailansichten der Sensoranordnung gemäß Fig. 1;
- Fig. 5: eine schematische Ansicht von Extrudaten für die Herstellung eines Laufstreifens des Reifens mit einem Sensorelement gemäß einer Ausführungsform; und
- Fig. 6: ein Flussdiagramm zur Durchführung des erfindungsgemäßen Verfahrens.

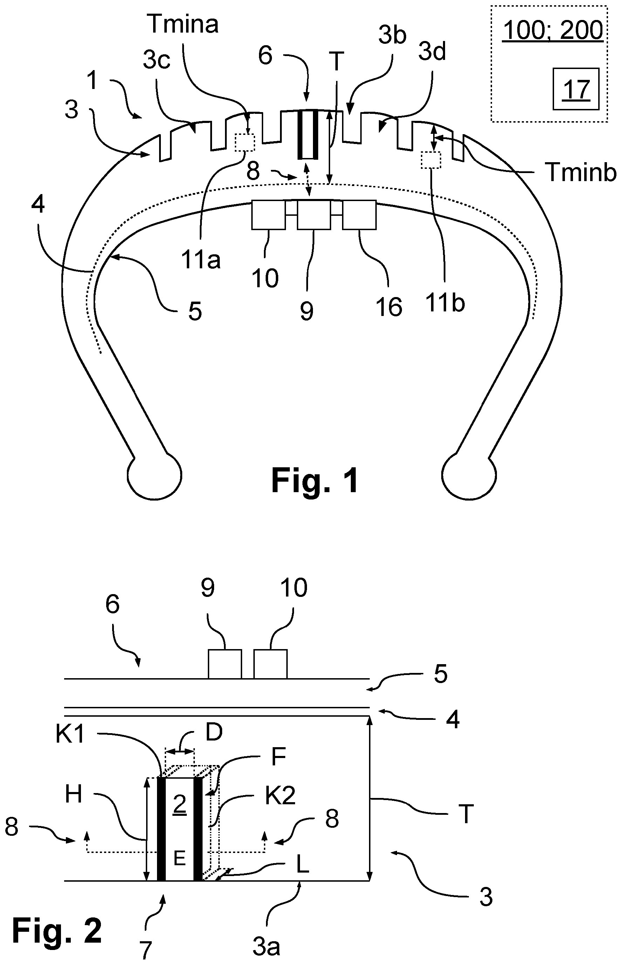

Gemäß Figur 1 ist ein Reifen 1, insbesondere ein Fahrzeugreifen, in einer Schnittansicht dargestellt, der einen Laufstreifen 3, eine Karkasse 4 sowie eine Innenschicht 5 aufweist. Der Reifen 1 kann auch weitere Schichten, die hier der Übersichtlichkeit halber nicht gezeigt sind, aufweisen. Im Reifen 1, insbesondere im Laufstreifen 3, ist eine Sensoranordnung 6 vorgesehen, die dazu dient, eine Profiltiefe T des Reifens 1 zu ermitteln, wobei mithilfe der Sensoranordnung 6 eine Messung der Profiltiefe T auch im Betrieb des Reifens 1, d.h. während der Fahrt stattfinden kann.

Dazu weist die Sensoranordnung 6 gemäß der Detailansicht in Fig. 2 ein Sensorelement 7 auf, das durch zwei Kontaktstellen K1, K2 (Elektroden) sowie durch eine dielektrische Schicht 2 ausgebildet wird, wobei die dielektrische Schicht 2 zwischen den beiden Kontaktstellen K1, K2 angeordnet ist. Dadurch wird eine Art Kondensator im Laufstreifen 3 ausgebildet, der gemäß der Ausführungsform in Fig. 2 von der Oberfläche 3a des Laufstreifens 3 ausgehend senkrecht in Richtung der Karkasse 4 verläuft, wobei eine Höhe H des Sensorelementes 7 bzw. der dielektrischen Schicht 2 lediglich beispielhaft gewählt ist.

Die beiden Kontaktstellen K1, K2 sind jeweils über eine signalübertragende Verbindung 8 mit einer Messeinrichtung 9 verbunden, die sich in der Ausführungsform gemäß Fig. 1 auf der Innenschicht 5 des Reifens 1 befindet. Die signalübertragende Verbindung 8 ist in den Figuren lediglich schematisch als gestrichelte Linie dargestellt. Dadurch soll angedeutet werden, dass eine beliebige Verbindung 8 vorgesehen sein kann, beispielsweise eine drahtgebundene mehradrige Verbindung zum Ermöglichen einer Energie- und Datenübertragung zwischen dem Sensorelement 7 und der Messeinrichtung 9. Weiterhin ist eine Auswerteeinrichtung 10 vorgesehen, die sich ebenfalls auf der Innenschicht 5 befindet und die mit der Messeinrichtung 9 signalleitend verbunden ist. Die Messeinrichtung 9 und die Auswerteeinrichtung 10 können auch zusammengefasst sein.

Die Messeinrichtung 9 dient dem Erfassen einer Sensor-Messgröße M, wobei die Sensor-Messgröße M eine Kapazität C des Sensorelementes 7 charakterisiert. Die Auswerteeinrichtung 10 ist dafür vorgesehen, die Sensor-Messgröße M hinsichtlich der Kapazität C auszuwerten und in Abhängigkeit davon auf die Profiltiefe T des Reifens 1 zu schließen. Gegebenenfalls kann auch vorgesehen sein, die Auswerteeinrichtung 10 außerhalb des Reifens 1 anzuordnen und die Sensor-Messgröße M unverarbeitet (oder lediglich vorverarbeitet) von der Messeinrichtung 9 in entsprechender Weise an die außerhalb gelegene Auswerteeinrichtung 10 auszugeben, so dass die Ermittlung der Profiltiefe T außerhalb des Reifens 1, beispielsweise im Fahrzeug 100 und/oder auf einem portablen Anzeigegerät 200, z.B. Smartphone oder PDA, stattfinden kann. Weiterhin können während der Fahrt auch Sensor-Messgrößen M oder auch ermittelte Profiltiefen T gesammelt bzw. zwischengespeichert und diese mit einem Zeitindex gesammelten Daten sowie auch aktuelle Sensor-Messgrößen M beim Betanken des Fahrzeugs oder in der Werkstatt von außerhalb ausgelesen werden.

Um eine Messung der Sensor-Messgröße M zu ermöglichen und daraus die Profiltiefe T ermitteln zu können, ist gemäß der Detailansicht in Fig. 2 vorgesehen, das Sensorelement 7 im Wesentlichen senkrecht zu der Oberfläche 3a des Laufstreifens 3 anzuordnen, d.h. in Richtung der zu ermittelnden Profiltiefe T. Von der Messeinrichtung 9 kann über die signalübertragende Verbindung 8 in einer entsprechenden elektrischen Schaltung als Sensor-Messgröße M die Kapazität C oder eine damit zusammenhängende Größe des in Form eines Plattenkondensators ausgeführten Sensorelementes 7 ermittelt werden. Die Kapazität C ist hierbei abhängig von dem Material der dielektrischen Schicht 2, durch das eine Dielektrizitätskonstante E festlegt wird, sowie einer Dicke D der dielektrischen Schicht 2 und einer Querschnittsfläche F der dielektrischen Schicht 2, wobei sich die Querschnittsfläche F aus der Höhe H und einer Länge L der dielektrischen Schicht 2 ergibt. Somit gilt: C = E x F/D = E × L × H/D. Die Sensorelemente 7 können hierbei Kapazitäten C von 1pF bis 19kF, vorzugsweise zwischen 5pF und 1mF bei kunstsoffbasierten dielektrischen Schichten 2, aufweisen.

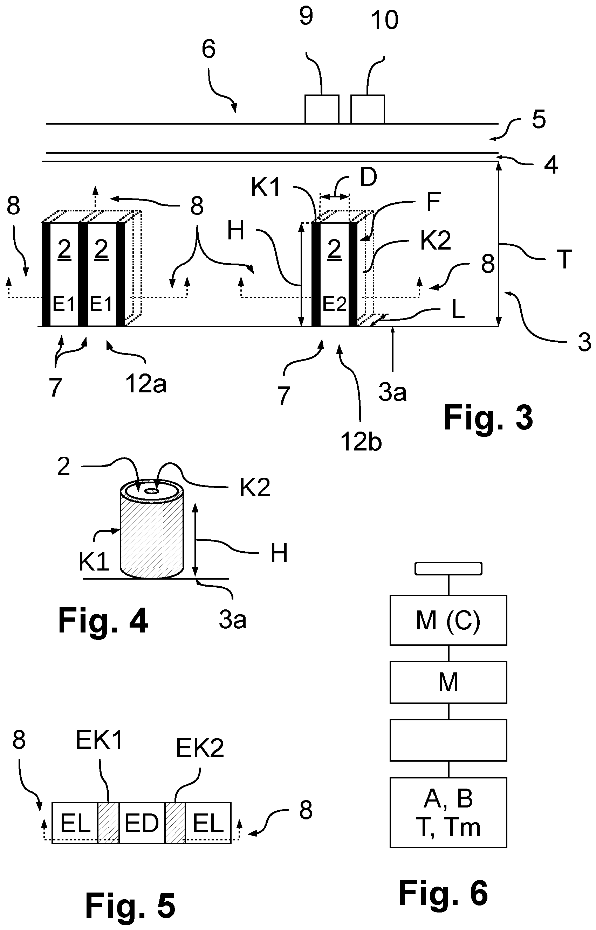

Statt der Form eines Plattenkondensators kann das Sensorelement 7 gemäß Fig. 4 die Form eines Zylinderkondensators haben, der zwei zylinderförmige Kontaktstellen K1, K2 mit dazwischenliegender ebenfalls zylindrisch ausgeführter dielektrischer Schicht 2 aufweist. Die zylinderförmigen Kontaktstellen K1, K2 sind ebenfalls einzeln über die signalübertragende Verbindung 8 kontaktiert. Die Ausrichtung des Zylinderkondensators erfolgt ebenfalls senkrecht von der Oberfläche 3a des Laufstreifens 3 abstehend, d.h. in Richtung der Höhe H, so dass sich bei einer Abnutzung des Reifens 1 die Höhe H der dielektrischen Schicht 2 verändert und darüber auch die Kapazität C bzw. die Sensor-Messgröße M. Alternativ kann auch eine Ausführung als Wickelkondensator vorgesehen sein, d.h. eine entsprechend zylindrische Ausführung des Sensorelementes 7 mit aufgewickelten und einzeln kontaktierten Kontaktstellen K1, K2, zwischen denen ebenfalls aufgewickelt die dielektrische Schicht 2 angeordnet ist.

Durch eine Messung der Kapazität C des Sensorelementes 7 kann in Kenntnis der im Wesentlichen unveränderlichen Dicke D der dielektrischen Schicht 2 und der Dielektrizitätskonstante E die Querschnittsfläche F der dielektrischen Schicht 2 abgeschätzt werden. Da zudem die unveränderliche Länge L der dielektrischen Schicht 2 bekannt ist, kann aus der Kapazität C die Höhe H der dielektrischen Schicht 2 ermittelt werden, wobei die Höhe gemäß Fig. 2 parallel zur Profiltiefe T ausgerichtet ist. Ist das Sensorelement 7 bzw. die dielektrische Schicht 2 aufgrund der Krümmung des Reifens 1 bzw. des Laufstreifens 3 entlang der Umfangsrichtung des Reifens 3 gebogen, ist statt der Länge L entsprechend eine Bogenlänge anzusetzen, um die Fläche F zu erhalten. Bei einem Zylinderkondensator gemäß Fig. 4 bzw. einem Wickelkondensator werden entsprechend die äußeren und inneren Zylindermäntel der dielektrischen Schicht 2 angesetzt, um die Querschnittsfläche F bzw. das Volumen der dielektrischen Schicht 2 zu ermitteln.

Aus der Höhe H kann unmittelbar auf die verbleibende Profiltiefe T des Laufstreifens 3 geschlossen werden, wenn die genaue Positionierung des Sensorelementes 7 im Laufstreifen 3 bekannt ist. Dazu kann beispielsweise bei Inbetriebnahme des Reifens 1 die aus der Kapazität C ermittelte Höhe H des Sensorelementes 7 mit der Profiltiefe T korreliert werden und im Betrieb des Reifens 1 aus einer Veränderung der Höhe H auf die Veränderung der Profiltiefe T geschlossen werden, die direkt damit zusammenhängt.

Alternativ kann auch eine Kalibrierung vorgesehen sein, indem beispielsweise in der Auswerteeinrichtung 10 eine Kennlinie A und/oder ein Kennlinienfeld B hinterlegt sind, über die bzw. das der gemessenen Sensor-Messgröße M bzw. Kapazität C eine Profiltiefe T zugeordnet werden kann. Die Kennlinie A bzw. das Kennlinienfeld B können hierbei beispielsweise in Versuchen an einem vergleichbaren Reifen 1 ermittelt und auf der Auswerteeinrichtung 10 gespeichert werden. Nach dem Erfassen der Sensor-Messgröße M bzw. der Kapazität C kann dann eine Zuordnung einer Profiltiefe T erfolgen.

In der Kennlinie A bzw. in dem Kennlinienfeld kann gemäß einer Ausführung z.B. berücksichtigt sein, dass die beiden Kontaktstellen K1, K2 nicht in konstantem Abstand zueinanderstehen bzw. sich die Dicke D der dielektrischen Schicht 2 mit der Höhe H verändert. Dadurch kann z.B. eine Änderung der Auflösung mit abnehmender Profiltiefe T gezielt eingestellt werden, indem beispielsweise nahe der Oberfläche 3a des Laufstreifens 3 eine geringere Dicke D der dielektrischen Schicht 2 gewählt wird als weiter im Inneren des Laufstreifens 3. Dadurch verändert sich die Kapazität C bei abnehmender Profiltiefe T, d.h. im interessanten Bereich einer geringen Profiltiefe T, feinfühliger. Ergänzend oder alternativ kann auch die Dielektrizitätskonstante E mit der Höhe H verändert werden. Dadurch kann ebenfalls eine derartige nicht-lineare Abhängigkeit eingestellt werden.

Somit ist im Betrieb des Reifens 1 über die Messeinrichtung 9 lediglich die Kapazität C bzw. eine die Kapazität C charakterisierende Sensor-Messgröße M zu erfassen, die sich bei abnehmender Höhe H infolge des Abriebs des Laufstreifens 3 verringert, und anschließend über die Kennlinien A, B direkt die Profiltiefe T und/oder über die o.g. Formel die Höhe H und anschließend die Profiltiefe T zu ermitteln. Es kann auch eine Plausibilisierung erfolgen, indem die aus der Kalibrierung ermittelte Profiltiefe T mit der über die Formel bestimmten Profiltiefe T verglichen wird.

Gemäß einer weiteren Ausführungsform, die in Fig. 3 dargestellt ist, kann die Sensoranordnung 6 auch mehrere Sensorbereiche 12a, 12b aufweisen. Beispielhaft sind in Fig. 3 zwei Sensorbereiche 12a, 12b dargestellt. Es können aber auch mehr als zwei Sensorbereiche 12a, 12b, ... vorgesehen sein. Jeder Sensorbereich 12a, 12b weist hierbei jeweils ein Sensorelement 7 gemäß dem in Fig. 2 beschriebenen Aufbau mit den entsprechenden Abmessungen D, F, H, L und der jeweiligen signalübertragenden Verbindung 8 auf. Zwischen den Sensorbereichen 12a, 12b unterscheiden sich hierbei zum einen die Dielektrizitätskonstanten E1, E2 in den beiden Sensorelementen 7 voneinander und zum anderen ist im ersten Sensorbereich 12a ein gestapelter Plattenkondensator vorgesehen, der aus zwei dielektrischen Schichten 2 mit dazwischenliegender zusätzlicher Kontaktstelle besteht. Demnach ist in einem ersten Sensorbereich 12a eine dielektrische Schicht 2 mit einer ersten Dielektrizitätskonstante E1 und in einem zweiten Sensorbereich 12b eine dielektrische Schicht 2 mit einer zweiten Dielektrizitätskonstante E2 vorgesehen, wobei dazu beispielsweise unterschiedliche Materialien für die jeweiligen dielektrischen Schichten 2 gewählt werden können. Die dazwischenliegende Kontaktstelle ermöglicht das Erfassen der Kapazitäten C der beiden dielektrischen Schichten 2 im gestapelten Plattenkondensator.

Dadurch wird erreicht, dass sich für die jeweiligen Sensorbereiche 12a, 12b eine andere Abhängigkeit zwischen der von der Messeinrichtung 9 gemessenen Sensor-Messgröße M bzw. der Kapazität C und der daraus folgenden Profiltiefe T ergibt, so dass darüber die Auflösung bei der Ermittlung der Profiltiefe T eingestellt werden kann. Dies kann ergänzend oder alternativ auch dadurch erreicht werden, dass beispielsweise die Dicke D oder die Länge L der jeweiligen dielektrischen Schicht 2 zwischen zwei unterschiedlichen Sensorbereichen 12a, 12b verändert wird. Ergänzend kann auch die Art des Kondensatoraufbaus geändert werden, beispielsweise ein gestapelter oder nicht-gestapelter Plattenkondensator im ersten Sensorbereich 12a und ein Zylinderkondensator im zweiten Sensorbereich 12b.

Eine Anpassung der Auflösung bei der Ermittlung der Profiltiefe T kann vorgesehen sein, wenn mit einer Sensoranordnung 6 über mehrere Sensorbereiche 12a, 12b an mehreren Positionen im Laufstreifen 3 eine Profiltiefe T ermittelt werden soll. Liegen beispielsweise an unterschiedlichen Positionen unterschiedlich starke Belastungen auf den Laufstreifen 3 vor, erfolgt auch ein unterschiedlich starker Materialabtrag. Bei geringem Materialabtrag, beispielsweise im Bereich einer Reifenschulter des Reifens 3 bzw. in Randbereichen des Laufstreifens 3, kann eine höhere Auflösung sinnvoll sein, um auch kleine Veränderungen in der Profiltiefe T erfassen zu können, insbesondere auch an Positionen des Laufstreifens 3, die weniger dick sind. In dem Bereich des Laufstreifens 3, der im Betrieb des Reifens 1 auf einer Fahrbahn aufliegt und der sich demnach stärker abnutzt, kann hingegen eine geringere Auflösung ausreichend sein, da sich ein eher größerer Materialabtrag und somit eine größere Veränderung in der Profiltiefe T ergibt und das Erfassen von kleineren Veränderungen in der Profiltiefe T weniger entscheidend ist. Somit kann in Abhängigkeit der Anwendung die Auflösung variabel eingestellt werden.

Mehrere Sensorbereiche 12a, 12b können somit vorgesehen sein, um beispielsweise eine positionsgetreue Ermittlung der Profiltiefe T für unterschiedliche Positionen am Laufstreifen 3 zu ermöglichen. Dazu können in lokalen Bereichen des Laufstreifens 3 jeweils Sensorbereiche 12a, 12b mit unterschiedlichen Materialien bzw. Dielektrizitätskonstanten E, E1, E2 sowie Abmessungen D, L, F, H oder Arten von Kondensatoraufbauten vorgesehen sein, die jeweils über eine signalübertragende Verbindung 8 mit der Messeinrichtung 9 verbunden sind, so dass z.B. koordiniert von der Auswerteeinrichtung 10 eine positionsgetreue Ermittlung und Zuordnung der Profiltiefe T erfolgen kann. Die laterale Ausrichtung der dielektrischen Schicht 2 im Laufstreifen 3 kann hierbei derartig gewählt sein, dass sich die dielektrische Schicht 2 in Umfangsrichtung oder quer zur Umfangsrichtung oder in einem Winkelversatz erstreckt.

Ein Sensorelement 7 kann hierbei aber auch über den gesamten Umfang des Laufstreifens 3 angeordnet sein, um beispielsweise eine über den Umfang gemittelte Profiltiefe Tm zu erhalten. Diese gemittelte Profiltiefe Tm kann auch mit Profiltiefen T von lokal angeordneten Sensorelementen 7 verglichen bzw. plausibilisiert werden, um beispielsweise Ausfälle oder lokale Abnutzungen des Laufstreifens 3 zu erkennen.

Weiterhin kann gemäß Fig. 1 vorgesehen sein, dass die Sensoranordnung 6 an expliziten Messstellen 11a, 11b derartig im Laufstreifen 3 angeordnet ist, dass in einfacher Weise eine Ermittlung einer gesetzlichen Mindest-Profiltiefe Tmina oder einer empfohlenen Mindest-Profiltiefe Tminb erfolgen kann. Dazu ist die Sensoranordnung 6 in unterschiedlicher Höhe in den Laufstreifen 3 eingefügt. D.h. eine Veränderung der Kapazität C für die jeweilig Sensoranordnung 6 ergibt sich erst dann, wenn der Laufstreifen 3 um die jeweilige Mindest-Profiltiefe Tmina, Tminb abgefahren ist, da erst dann ein Abtragen der dielektrischen Schicht 2 erfolgt. Wird also eine Veränderung der Sensor-Messgröße M bzw. der Kapazität C für diese expliziten Messstellen 11a, 11b erfasst, so kann dies dem Fahrer und/oder der Werkstatt entsprechend angezeigt werden, so dass ein Reifenwechsel veranlasst werden kann. Alternativ kann auch vorgesehen sein, dass sich eine Veränderung der Sensor-Messgrößen M bzw. der Kapazität C für diese expliziten Messstellen 11a, 11b lediglich bis zum Erreichen der jeweiligen Mindest-Profiltiefe Tmina, Tminb ergibt und die Sensoranordnung 6 anschließend vollständig abgetragen ist. Auch darüber kann ein Hinweis für einen Reifenwechsel gegeben werden.

Das Einbringen der Sensorelemente 7 in den Laufstreifen 3 kann beispielsweise während der Herstellung des Laufstreifens 3 und vor dem Reifenaufbauprozess erfolgen. Dazu kann vorgesehen sein, in einem herkömmlichen Herstellungsprozess des Laufstreifens 3, in dem die einzelnen Gummimischungen des Laufstreifens 3 zunächst als Laufstreifen-Extrudate EL aus einem Extruder bereitgestellt und anschließend im Vulkanisierungsprozess auf der Reifenaufbautrommel zusammengefügt werden, zusätzliche Kontaktstellen-Extrudate EK1, EK2 sowie ein Dielektrikum-Extrudat ED aus weiteren Extrudern bereitzustellen und diese mit dem Laufstreifen-Extrudaten EL zu kombinieren. Dies ist schematisch in Fig. 5 dargestellt, wonach zwischen den Laufstreifen-Extrudaten EL eines herkömmlichen Laufstreifens 3 an den entsprechenden Stellen zwei Kontaktstellen-Extrudate EK1, EK2 und dazwischenliegend das Dielektrikum-Extrudat ED angeordnet sind. Das Zusammenfügen kann hierbei bereits im Extruder oder aber anschließend vor dem Auflegen auf die Reifenaufbautrommel erfolgen.

In einem anschließenden Erwärmungsprozess bzw. Vulkanisierungsprozess nach dem Auflegen und Aufwickeln auf der Reifenaufbautrommel werden diese entsprechend dauerhaft zusammengefügt, so dass der Laufstreifen 3 gemäß Fig. 2 mit dem integrierten Sensorelement 7 ausgebildet werden kann. Ergänzend werden noch die signalübertragenden Verbindungen 8 mit eingebracht, um eine Verbindung zwischen den Kontaktstellen K1, K2 und der Messeinrichtung 9 zu erhalten. Je nach Ausführung der Sensorelemente 7 können die Kontaktstellen-Extrudate EK1, EK2 und das Dielektrikum-Extrudat ED entsprechend über den gesamten Umfang bzw. über die gesamte Länge des noch nicht aufgewickelten Laufstreifens 3 oder aber lediglich über lokale Bereiche ausgedehnt sein.

Gemäß einer Alternative können der Laufstreifen-Extrudate EL mit den Kontaktstellen-Extrudaten EK1, EK2 sowie dem Dielektrikum-Extrudat ED auch erst auf der Reifenaufbautrommel schichtweise zusammengefügt werden. Die einzelnen Extrudate EL, EK1, EK2, ED werden dann einzeln bereitgestellt und einzeln auf die Reifenaufbautrommel überführt und aufgewickelt, so dass der endgültige Laufstreifen 3 aus den unterschiedlichen Schichten erst auf der Reifenaufbautrommel durch das Aufwickeln zusammengestellt wird. In einem anschließenden Vulkanisierungsprozess wird dann der Reifen 1 mit diesem Laufstreifen 3 fertiggestellt.

Ist eine Ausdehnung des Sensorelementes 7 über den gesamten Umfang vorgesehen, kann für die erste Kontaktstelle K1 oder die zweite Kontaktstelle K2 auf einen im Laufstreifen 3 herkömmlicherweise ohnehin vorhandenen Kohlenstoffstreifen, einem sog. Carbon-Center-Beam, zurückgegriffen werden, der in einem herkömmlichen Laufstreifen 3 beispielsweise als Blitzableiter dient und der als leitfähige Schicht mittig und vollumfänglich in den Laufstreifen 3 integriert ist. Dieser kann somit eine Doppelfunktion im Laufstreifen 1 einnehmen. Die jeweils andere Kontaktstelle K2, K1 kann in identischer Weise oder ähnlich ausgeführt sein. Demnach kann ergänzend zu dem im Herstellungsprozess ohnehin vorgesehenen Kohlenstoffstreifen ein zweiter Kohlenstoffstreifen nach derselben Systematik mit einem entsprechend ausgeführten Kontaktstellen-Extrudat EK1, EK2 in den Laufstreifen 3 eingebracht werden. Es können aber auch andere Ausführungen von Kontaktstellen-Extrudaten EK1, EK2 vorgesehen sein, wobei die Kontaktstellen-Extrudate EK1, EK2 beispielsweise aus einem Gummimaterial mit beigesetzten leitfähigen Partikeln, z.B. Rußpartikeln oder kohlenstoffhaltigen Partikeln, ausgeführt sein können, um nach dem Aushärten eine leitfähige Gummischicht für die jeweilige Kontaktstelle K1, K2 zu erhalten.

Als dielektrische Schicht 2 bzw. das Dielektrikum-Extrudat ED kann entweder direkt das Gummimaterial des Laufstreifens 3 verwendet werden oder aber ein Gummimaterial, dem zusätzlich entsprechende Partikel zum Ausbilden einer dielektrischen Eigenschaft zugefügt sind, oder aber ein anderes Material mit dielektrischen Eigenschaften. Hierbei ist lediglich dafür zu sorgen, dass die dielektrische Schicht 2 im Gegensatz zu den Kontaktstellen K1, K2 schwach-leitend bzw. nicht-leitend ist, so dass von der Messeinrichtung 9 eine Kapazität C oder eine diese charakterisierende Sensor-Messgröße M ermittelt werden kann. Wird ein anders Material verwendet, kann die dielektrische Schicht 2 von einer dünnen Gummischicht umgeben sein zur besseren Verbindbarkeit mit dem umgebenden Gummimaterial des Laufstreifens 3 bzw. der Kontaktstellen K1, K2.

Als geeignete Materialien oder der Gummimischung hinzugefügte Partikel können beispielsweise verwendet werden:
Folien aus Kunststoff oder Kunststoffmischungen mit z.B. Aluminiumbeschichtung, Polyethylen, PTFE, Titandioxid (TiO2), ferroelektrische Materialien wie zum Beispiel Bariumtitanat (BaTiO3), Keramiken (zum Beispiel Steatit, Aluminiumoxid), z.B. aus fein gemahlenen Granulaten, Aluminium-Silikate, Magnesium-Silikate, Aluminiumoxide (relative Permittivität εr z.B. zwischen 6 und 14.000), Aluminium- und Tantal-Elektrolyte, z.B. deren amorphe Oxide Al2O3, Ta2O5), Glimmer, Übergangsmetalle (z. B. HfO2, ZrO2), Mischoxide wie Hafniumsilikat und Zirkoniumsilikat, Strontiumtitanat und/oder Bariumtitana oder kristalline Oxide Seltener Erden (z. B. Pr2O3, Gd2O3 und Y2O3).

Da für alle Bereiche des Sensorelementes 7 Gummimaterialien oder gummibeschichtete Materialien verwendet werden, kann nach dem Aushärten im Vulkanisierungsprozess eine gute Verbindung zwischen den einzelnen Komponenten sowie dem Sensorelement 7 und dem Laufstreifen 3 gewährleistet werden, ohne dass dabei die Reifeneigenschaften maßgeblich beeinflusst werden.

Bei einer lokalen Anordnung von Sensorelementen 7 bzw. Sensorbereichen 12a, 12b im Laufstreifen 3 kann die Ausrichtung entweder entlang der Umfangsrichtung des Laufstreifens 3 oder in einer beliebigen anderen Winkelstellung dazu, beispielsweise auch quer zur Umfangsrichtung, erfolgen, beispielsweise auch angepasst an eine Ausrichtung der Profilierung 3c des Laufstreifens 3. Die Sensorelemente 7 können auch im Bereich von die Profilierung 3c ausbildenden Profilrillen 3b bzw. Profilklötzen 3d im Laufstreifen 3 (s. Fig. 1) angeordnet sein, um auch in diesem Bereich eine Änderung der Profiltiefe T zu ermitteln, wobei die Sensorelemente 7 vorzugsweise der Kontur der Profilklötze 3d folgen. Beispielsweise kann dadurch erkannt werden, wann oder wie stark sich die Profilierung 3c im Betrieb des Reifens 1 abnutzt. Ist der Reifen 1 bis zur Profilierung 3c abgenutzt, was durch ein Sensorelement 7 unterhalb der Profilrille 3b oder in den Profilklötzen 3d erfasst werden kann, kann zudem auf einen nötigen Reifenwechsel hingewiesen werden.

Die Übertragung der gemessenen und entsprechend verarbeiteten Sensor-Messgröße M, die eine Kapazität C charakterisiert, und/oder der von der Auswerteeinrichtung 10 daraus ermittelten Profiltiefe T kann beispielsweise über ein Kommunikationsmodul 16 im Reifen 1 erfolgen, das ebenfalls auf der Innenschicht 5 des Reifens 1 angeordnet ist. Das Kommunikationsmodul 16 ist insbesondere ausgebildet, Daten drahtlos an eine übergeordnete Steuereinrichtung 17 z.B. im Fahrzeug 100 und/oder einer portable Anzeigeeinrichtung 200 zu übermitteln, sodass die ermittelte Sensor-Messgröße M beziehungsweise die Profiltiefe T im Fahrzeug 100 oder auf der portablen Anzeigeeinrichtung 200 zur weiteren Verarbeitung zur Verfügung steht. Ein derartiges Kommunikationsmodul 16 kann beispielsweise im Rahmen einer Reifendruckmessung, beispielsweise in einem TPMS-Modul, bereits im Reifen 1 vorhanden sein, sodass für die Übertragung der Daten auf ein bereits vorhandenes Kommunikationsmodul 16 zurückgegriffen werden kann, das mit der Messeinrichtung 9 und/oder der Auswerteeinrichtung 10 zu verbinden ist.

Weiterhin kann in dem Kommunikationsmodul 16 eine Energieversorgung bereitgestellt werden, die für die von der Messeinrichtung 9 durchgeführte Messung der Sensor-Messgröße M und gegebenenfalls auch für die von der Auswerteeinrichtung 10 durchgeführte Auswertung im Reifen 1 benötigt wird. In der Messeinrichtung 9 und/oder in der Auswerteeinrichtung 10 kann allerdings auch eine eigene Energieversorgung vorgesehen sein, beispielsweise eine Batterie und/oder eine autarke Energieversorgung. Weiterhin kann auch eine Speichereinrichtung (nicht dargestellt) vorgesehen sein, in der Sensor-Messgrößen M und/oder Profiltiefen T mit einem Zeitindex abgespeichert werden können, so dass diese auch nachträglich drahtlos beispielsweise an eine Werkstatt übermittelt werden können.

Gemäß Figur 6 kann das erfindungsgemäße Verfahren zur Messung einer Profiltiefe T beispielsweise wie folgt durchgeführt werden:
In einem anfänglichen Schritt St0 wird der Reifen 1 mit der entsprechenden beschriebenen Sensoranordnung 6 bereitgestellt. In einem ersten Schritt St1 wird von der Messeinrichtung 9 eine Sensor-Messgröße M erfasst, aus der sich eine Kapazität C oder eine damit zusammenhängende Größe für jedes Sensorelement 7 herleiten lässt. Darüber kann unmittelbar nach der Inbetriebnahme des Reifens 1 beispielsweise ein Ausgangswert für die Kapazität C bei größtmöglicher Profiltiefe T ermittelt werden. Aus dieser Kapazität C kann beispielsweise auch eine Höhe H des Sensorelementes 7 im jeweiligen Sensorbereich 12a, 12b unmittelbar nach der Inbetriebnahme des Reifens 1 ermittelt werden.

In bestimmten Zeitabständen bzw. Zeitintervallen dti wird nachfolgend in einem zweiten Schritt St2 die Sensor-Messgröße M erneut bestimmt, um in einem dritten Schritt St3 festzustellen, ob eine Veränderung der Sensor-Messgröße M im Betrieb des Reifens 1 vorliegt, d.h. ob eine Veränderung in der Kapazität C aufgetreten ist. Wie beschrieben, tritt eine Veränderung insbesondere dann auf, wenn sich die Höhe H der dielektrischen Schicht 2 verändert. Wird eine Veränderung in der Sensor-Messgröße M erfasst, wird also darauf geschlossen, dass sich infolge einer Abnutzung des Reifens 1 die Höhe H der dielektrischen Schicht 2 und somit auch die Profiltiefe T verringert haben. Die Zeitintervalle dti können in etwa identisch gewählt werden. Es können aber auch unterschiedliche Zeitintervalle dti vorgegeben werden, wobei die Zeitintervalle dti je nach Anwendung zwischen wenigen Millisekunden oder noch darunter bis hin zu Tagen liegen können.

Über die Kennlinie A und/oder das Kennlinienfeld B oder die o.g. Formel kann ggf. unter Kenntnis des Ausgangswertes für die Höhe H bei Inbetriebnahme des Reifens 1 in einem vierten Schritt St4 aus der Veränderung der Kapazität C auf die Profiltiefe T geschlossen werden. Dies kann für jeden Sensorbereich 12a, 12b gesondert erfolgen, wobei auch eine Plausibilisierung stattfinden kann, indem beispielsweise eine über den Reifenumfang gemittelte Profiltiefe Tm, die über ein über den gesamten Umfang des Laufstreifens 3 ausgedehntes Sensorelement 7 erfasst wird, mit ermittelten Profiltiefen T von lokal angeordneten Sensorelementen 7 oder aus anderen Messungen verglichen wird.

Nach dem vierten Schritt St4 wird zum zweiten Schritt St2 zurückgesprungen, um je nach Vorgabe in gewissen zeitlichen Abständen eine aktualisierte Profiltiefe T, Tm zur Weiterverarbeitung ermitteln zu können. Der dritte und der vierte Schritt St3, St4 können dabei im Reifen 1 oder außerhalb des Reifens 1 in der Auswerteeinrichtung 10 stattfinden.

### Bezugszeichenliste

- 1: Reifen
- 2: dielektrische Schicht
- 3: Laufstreifen
- 3a: Oberfläche des Laufstreifens 3
- 3b: Profilrille
- 3c: Profilierung
- 3d: Profilklötze
- 4: Karkasse
- 5: Innenschicht des Reifens 1
- 6: Sensoranordnung
- 7: Sensorelement
- 8: signalübertragende Verbindung
- 9: Messeinrichtung
- 10: Auswerteeinrichtung
- 11a, 11b: explizite Messstelle
- 12a: erster Sensorbereich
- 12b: zweiter Sensorbereich
- 16: Kommunikationsmodul
- 17: Steuereinrichtung
- 100: Fahrzeug
- 200: portables Anzeigegerät
- A: Kennlinie
- B: Kennlinienfeld
- C: Kapazität
- D: Dicke
- dti: Zeitintervalle zwischen Messungen
- E, E1, E2: Dielektrizitätskonstante
- ED: Dielektrikum-Extrudat
- EK1, EK2: Kontaktstellen-Extrudat
- EL: Laufstreifen-Extrudat
- F: Querschnittsfläche
- H: Höhe
- K1: erste Kontaktstelle
- K2: zweite Kontaktstelle
- L: Länge
- M: Sensor-Messgröße
- T: Profiltiefe
- Tm: gemittelte Profiltiefe
- Tmina: gesetzliche Mindest-Profiltiefe
- Tminb: empfohlene Mindest-Profiltiefe
- St1, St2, St3, St4: Schritte des Verfahrens

## Patentansprüche

1. Reifen (1), insbesondere Fahrzeugreifen, mit einem Laufstreifen (3) und mindestens einer Sensoranordnung (6),
wobei die mindestens eine Sensoranordnung (6) aufweist:
- mindestens einen Sensorbereich (12a, 12b), wobei der mindestens eine Sensorbereich (12a, 12b) mindestens ein Sensorelement (7) mit zwei Kontaktstellen (K1, K2) sowie mindestens einer zwischen den Kontaktstellen (K1, K2) angeordneten dielektrischen Schicht (2) aufweist, wobei der dielektrischen Schicht (2) eine Dielektrizitätskonstante (E; E1, E2), eine Dicke (D), eine Länge (L) und eine Höhe (H) zugeordnet ist, wobei das Sensorelement (7) zumindest bereichsweise derartig in den Laufstreifen (3) des Reifens (1) integriert ist, dass die dielektrische Schicht (2) des Sensorelementes (7) in Abhängigkeit einer Profiltiefe (T) des Reifens (1) in ihrer Höhe (H) infolge einer Abnutzung des Reifens (1) veränderbar ist, und
- eine Messeinrichtung (9), wobei das Sensorelement (7) über die beiden Kontaktstellen (K1, K2) derartig über eine signalübertragende Verbindung (8) mit der Messeinrichtung (9) verbunden ist, dass die Veränderung der Höhe (H) der dielektrischen Schicht (2) durch das Erfassen einer Sensor-Messgröße (M) von der Messeinrichtung (9) detektierbar ist,
**dadurch gekennzeichnet, dass**
die Dielektrizitätskonstante (E; E1, E2) der dielektrischen Schicht (2) und/oder die Dicke (D) der dielektrischen Schicht (2) und/oder die Länge (L) der dielektrischen Schicht (2) zwischen Sensorelementen (7) aus unterschiedlichen Sensorbereichen (12a, 12b) variiert.

2. Reifen (1) nach Anspruch 1,
**dadurch gekennzeichnet, dass**
die Kontaktstellen (K1, K2) jeweils durch eine elektrisch leitfähige Gummischicht ausgebildet sind, wobei die elektrische leitfähige Gummischicht an der dielektrischen Schicht (2) anliegt, oder die Kontaktstellen (K1, K2) durch eine elektrisch leitfähige Beschichtung der dielektrischen Schicht (2) ausgebildet sind oder die Kontaktstellen (K1, K2) als leitfähige Dünnschichten, beispielsweise aus Metall, ausgeführt sind, wobei die Dünnschichten an der dielektrischen Schicht (2) anliegen.

3. Reifen (1) nach einem der vorhergehenden Ansprüche,
**dadurch gekennzeichnet, dass**
die dielektrische Schicht (2) durch eine Gummischicht mit dielektrischen Eigenschaften ausgebildet ist und/oder dass die dielektrische Schicht (2) eine Gummibeschichtung aufweist zur mechanischen Verbindung mit dem umgebenden Material des Laufstreifens (3) und/oder der Kontaktstellen (K1, K2).

4. Reifen (1) nach einem der vorhergehenden Ansprüche,
**dadurch gekennzeichnet, dass**
das Sensorelement (7) im Wesentlichen senkrecht von einer Oberfläche (3a) des Laufstreifens (3) ausgehend in den Laufstreifen (3) hineinragt.

5. Reifen (1) nach einem der vorhergehenden Ansprüche,
**dadurch gekennzeichnet, dass**
die Sensor-Messgröße (M) durch eine Kapazität (C) oder eine davon abhängige Größe gegeben ist.

6. Reifen (1) nach einem der vorhergehenden Ansprüche,
**dadurch gekennzeichnet, dass**
die Profiltiefe (T) aus der Sensor-Messgröße (M) in Abhängigkeit der Dielektrizitätskonstante (E; E1, E2) der dielektrischen Schicht (2), der Dicke (D) der dielektrischen Schicht (2) sowie der Länge (L) der dielektrischen Schicht (2) und/oder aus der Sensor-Messgröße (M) über eine Kennlinie (A) und/oder ein Kennlinienfeld (B) ermittelbar ist.

7. Reifen (1) nach einem der vorhergehenden Ansprüche,
**dadurch gekennzeichnet, dass**
die Dielektrizitätskonstante (E; E1, E2) der dielektrischen Schicht (2) und/oder die Dicke (D) der dielektrischen Schicht (2) über die Höhe (H) und/oder die Länge (L) der dielektrischen Schicht (2) eines Sensorelementes (7) innerhalb eines Sensorbereiches (12a, 12b) im Wesentlichen gleichbleibt zum Ausbilden eines linearen Zusammenhangs zwischen der Sensor-Messgröße (M) und der Profiltiefe (T) oder variiert zum Ausbilden eines nicht-linearen Zusammenhangs zwischen der Sensor-Messgröße (M) und der Profiltiefe (T).

8. Reifen (1) nach einem der vorhergehenden Ansprüche,
**dadurch gekennzeichnet, dass**
ein oder mehrere Sensorelemente (7) einen gestapelten Plattenkondensator mit mehreren dielektrischen Schichten (2) ausbilden, wobei sich Kontaktstellen (K1, K2) und dielektrische Schichten des gestapelten Plattenkondensators abwechseln.

9. Reifen (1) nach einem der vorhergehenden Ansprüche,
**dadurch gekennzeichnet, dass**
mindestens zwei Sensorelemente (7) in einem Sensorbereich (12a, 12b) vorgesehen sind, wobei die Sensorelemente (7) in einer Reihenschaltung und/oder einer Parallelschaltung zwischen den jeweiligen Kontaktstellen (K1, K2) angeordnet sind.

10. Reifen (1) nach einem der vorhergehenden Ansprüche,
**dadurch gekennzeichnet, dass**
im Reifen (1) weiterhin eine Auswerteeinrichtung (10) zum Ermitteln der Profiltiefe (T) des Reifens (1) in Abhängigkeit der ermittelten Sensor-Messgröße (M) vorgesehen ist, wobei die Auswerteeinrichtung (10) dazu ausgebildet ist,
- aus der Sensor-Messgröße (M) die Höhe (H) der dielektrischen Schicht (2) und daraus die Profiltiefe (T), oder
- aus der Sensor-Messgröße (M) über eine Kennlinie (A) oder ein Kennlinienfeld (B) die Profiltiefe (T)
zu ermitteln.

11. Reifen (1) nach einem der vorhergehenden Ansprüche,
**dadurch gekennzeichnet, dass**
das mindestens eine Sensorelement (7) mindestens eines Sensorbereiches (12a, 12b) zumindest bereichsweise derartig an einer expliziten Messstelle (11a, 11b) in den Laufstreifen (3) des Reifens (1) integriert ist, dass bei Erreichen einer vorgegebenen Mindestprofiltiefe (Tmina, Tminb) infolge einer Abnutzung des Reifens (1) die Höhe der dielektrischen Schicht (2) beginnt sich zu verändern oder die gesamte dielektrische Schicht (2) bereits abgetragen ist.

## Claims

1. Tyre (1), in particular a vehicle tyre, with a tread (3) and at least one sensor arrangement (6),
the at least one sensor arrangement (6) having:
- at least one sensor region (12a, 12b), the at least one sensor region (12a, 12b) having at least one sensor element (7) with two contact points (K1, K2) and at least one dielectric layer (2) arranged between the contact points (K1, K2), the dielectric layer (2) being assigned a dielectric constant (E; E1, E2), a thickness (D), a length (L) and a height (H), the sensor element (7) being integrated in the tread (3) of the tyre (1), at least in some regions, in such a way that the dielectric layer (2) of the sensor element (7) can change in its height (H) in dependence on a profile depth (T) of the tyre (1) as a consequence of wear of the tyre (1), and
- a measuring device (9), the sensor element (7) being connected to the measuring device (9) via the two contact points (K1, K2) by means of a signal-transmitting connection (8) in such a way that the change in the height (H) of the dielectric layer (2) can be detected by the measuring device (9) by the detection of a sensor measured variable (M),
**characterized in that**
the dielectric constant (E; E1, E2) of the dielectric layer (2) and/or the thickness (D) of the dielectric layer (2) and/or the length (L) of the dielectric layer (2) varies between sensor elements (7) from different sensor regions (12a, 12b).

2. Tyre (1) according to Claim 1,
**characterized in that**
the contact points (K1, K2) are each formed by an electrically conductive rubber layer, the electrically conductive rubber layer lying against the dielectric layer (2), or the contact points (K1, K2) are formed by an electrically conductive coating of the dielectric layer (2) or the contact points (K1, K2) take the form of conductive thin layers, for example of metal, the thin layers lying against the dielectric layer (2).

3. Tyre (1) according to one of the preceding claims,
**characterized in that**
the dielectric layer (2) is formed by a rubber layer with dielectric properties and/or in that the dielectric layer (2) has a rubber coating for the mechanical connection to the surrounding material of the tread (3) and/or the contact points (K1, K2).

4. Tyre (1) according to one of the preceding claims,
**characterized in that**
the sensor element (7) protrudes into the tread (3) substantially perpendicularly from a surface (3a) of the tread (3).

5. Tyre (1) according to one of the preceding claims,
**characterized in that**
the sensor measured variable (M) is provided by a capacitance (C) or a variable dependent on it.

6. Tyre (1) according to one of the preceding claims,
**characterized in that**
the profile depth (T) can be ascertained from the sensor measured variable (M) in dependence on the dielectric constant (E; E1, E2) of the dielectric layer (2), the thickness (D) of the dielectric layer (2) and the length (L) of the dielectric layer (2) and/or from the sensor measured variable (M) on the basis of a characteristic curve (A) and/or a family of characteristic curves (B).

7. Tyre (1) according to one of the preceding claims,
**characterized in that**
the dielectric constant (E; E1, E2) of the dielectric layer (2) and/or the thickness (D) of the dielectric layer (2) remains substantially the same over the height (H) and/or the length (L) of the dielectric layer (2) of a sensor element (7) within a sensor region (12a, 12b) to form a linear relationship between the sensor measured variable (M) and the profile depth (T) or varies to form a non-linear relationship between the sensor measured variable (M) and the profile depth (T).

8. Tyre (1) according to one of the preceding claims,
**characterized in that**
one or more sensor elements (7) form a stacked plate capacitor with a number of dielectric layers (2), the contact points (K1, K2) and dielectric layers of the stacked plate capacitor alternating with one another.

9. Tyre (1) according to one of the preceding claims,
**characterized in that**
at least two sensor elements (7) are provided in a sensor region (12a, 12b), the sensor elements (7) being arranged in a series connection and/or a parallel connection between the respective contact points (K1, K2).

10. Tyre (1) according to one of the preceding claims,
**characterized in that**
also provided in the tyre (1) is an evaluation device (10) for ascertaining the profile depth (T) of the tyre (1) in dependence on the ascertained sensor measured variable (M), the evaluation device (10) being designed to ascertain
- the height (H) of the dielectric layer (2) from the sensor measured variable (M), and to ascertain from that the profile depth (T), or
- the profile depth (T) from the sensor measured variable (M) on the basis of a characteristic curve (A) or a family of characteristic curves (B).

11. Tyre (1) according to one of the preceding claims,
**characterized in that**
the at least one sensor element (7) of at least one sensor region (12a, 12b) is integrated in the tread (3) of the tyre (1), at least in some regions, in such a way at an explicit measuring point (11a, 11b) that, when a predetermined minimum profile depth (Tmina, Tminb) is reached as a result of wear of the tyre (1), the height of the dielectric layer (2) begins to change or the entire dielectric layer (2) is already worn away.

## Revendications

1. Pneumatique (1), notamment pneumatique pour véhicule, comprenant une bande de roulement (3) et au moins un arrangement de capteurs (6),
l'au moins un arrangement de capteurs (6) possédant :
- au moins une zone de capteur (12a, 12b), l'au moins une zone de capteur (12a, 12b) possédant au moins un élément capteur (7) pourvu de deux points de contact (K1, K2) ainsi qu'au moins une couche diélectrique (2) disposée entre les points de contact (K1, K2), la couche diélectrique (2) étant associée à une constante diélectrique (E ; E1, E2), une épaisseur (D), une longueur (L) et une hauteur (H), l'élément capteur (7) étant intégré au moins par certaines zones dans la bande de roulement (3) du pneumatique (1) de telle sorte que la couche diélectrique (2) de l'élément capteur (7) peut être modifiée dans sa hauteur (H) en fonction d'une profondeur de profilé (T) du pneumatique (1) en conséquence d'une usure du pneumatique (1), et
- un dispositif de mesure (9), l'élément capteur (7) étant relié au dispositif de mesure (9) par les deux points de contact (K1, K2) par le biais d'une liaison de transmission de signal (8) de telle sorte que la modification de la hauteur (H) de la couche diélectrique (2) peut être détectée par l'acquisition d'une grandeur mesurée de capteur (M) par le dispositif de mesure (9),
**caractérisé en ce que**
la constante diélectrique (E ; E1, E2) de la couche diélectrique (2) et/ou l'épaisseur (D) de la couche diélectrique (2) et/ou la longueur (L) de la couche diélectrique (2) entre les éléments capteurs (7) de différentes zones de capteur (12a, 12b) varie.

2. Pneumatique (1) selon la revendication 1,
**caractérisé en ce que**
les points de contact (K1, K2) sont respectivement formés par une couche de caoutchouc électriquement conductrice, la couche de caoutchouc électriquement conductrice reposant contre la couche diélectrique (2), ou les points de contact (K1, K2) sont formés par un revêtement électriquement conducteur de la couche diélectrique (2) ou les points de contact (K1, K2) sont réalisés sous la forme de couches minces conductrices, par exemple en métal, les couches minces reposant contre la couche diélectrique (2).

3. Pneumatique (1) selon l'une des revendications précédentes,
**caractérisé en ce que**
la couche diélectrique (2) est formée par une couche en caoutchouc ayant des propriétés diélectriques et/ou **en ce que** la couche diélectrique (2) possède un revêtement en caoutchouc destiné à la liaison mécanique avec le matériau qui l'entoure de la bande de roulement (3) et/ou les points de contact (K1, K2).

4. Pneumatique (1) selon l'une des revendications précédentes,
**caractérisé en ce que**
l'élément capteur (7) fait saillie à l'intérieur de la bande de roulement (3) sensiblement en sortant perpendiculairement d'une surface (3a) de la bande de roulement (3).

5. Pneumatique (1) selon l'une des revendications précédentes,
**caractérisé en ce que**
la grandeur mesurée de capteur (M) est donnée par une capacité (C) ou une grandeur qui en dépend.

6. Pneumatique (1) selon l'une des revendications précédentes,
**caractérisé en ce que**
la profondeur de profilé (T) peut être déterminée à partir de la grandeur mesurée de capteur (M) en fonction de la constante diélectrique (E ; E1, E2) de la couche diélectrique (2), de l'épaisseur (D) de la couche diélectrique (2) ainsi que de la longueur (L) de la couche diélectrique (2) et/ou à partir de la grandeur mesurée de capteur (M) par le biais d'une courbe caractéristique (A) et/ou d'un diagramme caractéristique (B).

7. Pneumatique (1) selon l'une des revendications précédentes,
**caractérisé en ce que**
la constante diélectrique (E ; E1, E2) de la couche diélectrique (2) et/ou l'épaisseur (D) de la couche diélectrique (2) reste sensiblement constante sur la hauteur (H) et/ou la longueur (L) de la couche diélectrique (2) d'un élément capteur (7) à l'intérieur d'une une zone de capteur (12a, 12b) en vue de former une relation linéaire entre la grandeur mesurée de capteur (M) et la profondeur de profilé (T) ou varie en vue de former une relation non linéaire entre la grandeur mesurée de capteur (M) et la profondeur de profilé (T).

8. Pneumatique (1) selon l'une des revendications précédentes,
**caractérisé en ce que**
un ou plusieurs éléments capteurs (7) forment un condensateur à plaques empilé comprenant plusieurs couches diélectriques (2), les points de contact (K1, K2) et les couches diélectriques du condensateur à plaques empilé étant alternés.

9. Pneumatique (1) selon l'une des revendications précédentes,
**caractérisé en ce que**
au moins deux éléments capteurs (7) sont présents dans une zone de capteur (12a, 12b), les éléments capteurs (7) étant disposés en un circuit série et/ou un circuit parallèle entre les points de contact (K1, K2) respectifs.

10. Pneumatique (1) selon l'une des revendications précédentes,
**caractérisé en ce que**
un dispositif d'interprétation (10) destiné à déterminer la profondeur de profilé (T) du pneumatique (1) en fonction de la grandeur mesurée de capteur (M) déterminée est en outre présent dans le pneumatique (1), le dispositif d'interprétation (10) étant configuré pour déterminer
- à partir de la grandeur mesurée de capteur (M), la hauteur (H) de la couche diélectrique (2) et de là la profondeur de profilé (T), ou
- à partir de la grandeur mesurée de capteur (M), la profondeur de profilé (T) par le biais d'une courbe caractéristique (A) ou d'un diagramme caractéristique (B).

11. Pneumatique (1) selon l'une des revendications précédentes,
**caractérisé en ce que**
l'au moins un élément capteur (7) d'au moins une zone de capteur (12a, 12b) est intégré au moins par certaines zones au niveau d'un point de mesure explicite (11a, 11b) dans la bande de roulement (3) du pneumatique (1) de telle sorte que lorsqu'une profondeur de profilé minimale (Tmina, Tminb) est atteinte consécutivement à une usure du pneumatique (1), la hauteur de la couche diélectrique (2) commence à se modifier ou la couche diélectrique (2) complète est déjà enlevée.
